# EUROPEAN PATENT APPLICATION

(11) **EP 4 782 884 A1**
(43) Date of publication of application: **29.07.2026**
(21) Application number: 25829651.6
(22) Date of filing: 04.06.2025
(51) Int. Cl.: G01S 17/02

(54) **LIDAR AND VEHICLE**

(30) Priority: 18.06.2024 CN 202410791107
(71) Applicant: Yinwang Intelligent Technologies Co., Ltd., Shenzhen, Guangdong 518110 (CN)
(72) Inventor: LI, Haipeng, Shenzhen, Guangdong 518129 (CN); CHUAI, Shiyang, Shenzhen, Guangdong 518129 (CN); SUN, Nanjian, Shenzhen, Guangdong 518129 (CN); YU, Anliang, Shenzhen, Guangdong 518129 (CN)
(74) Representative: Gill Jennings & Every LLP
(86) International application number: PCT/CN2025/099147
(87) International publication number: WO 2025/261170

(57) **Abstract**

This application relates to a lidar and a vehicle. A first housing and a second housing of the lidar can define an enclosed cavity, and an internal lidar module is located in the cavity. A window region of the first housing is configured to allow laser light emitted by or laser light received by the lidar to pass through. The first housing of the lidar in embodiments of this application has a continuous curved surface, and an included angle between a tangent plane of any point in the window region and a horizontal plane is less than 45°, so that the lidar has smooth exterior lines. When mounted on a vehicle, the lidar does not significantly protrude from an exterior of the vehicle, and can be better integrated with the appearance of the vehicle, thereby improving aesthetic appeal of the vehicle, and helping reduce aerodynamic drag of the vehicle.

## Description

This application claims priority to Chinese Patent Application No. 202410791107.6, filed with the China National Intellectual Property Administration on June 18, 2024 and entitled "LIDAR AND VEHICLE", which is incorporated herein by reference in its entirety.

### TECHNICAL FIELD

This application relates to the field of lidar technologies, and in particular, to a lidar and a vehicle.

### BACKGROUND

As an "eye" of an automobile, a lidar is a primary way to obtain driving information, which is of great significance for ensuring driving safety. Current lidars have complex structures and relatively large sizes. When mounted on an automobile, the lidar significantly protrudes from an exterior surface of the automobile, which affects aesthetic appeal of the automobile and increases aerodynamic drag of the automobile.

### SUMMARY

Embodiments of this application provide a lidar and a vehicle. In this application, a structure design is performed on the lidar, so that the lidar in embodiments of this application has smooth exterior lines, can be better integrated with an appearance of a vehicle, and does not significantly protrude from the vehicle.

According to a first aspect, an embodiment of this application provides a lidar. The lidar includes a first housing, a second housing, and an internal lidar module. The first housing and the second housing define an enclosed cavity, and the internal lidar module is located in the cavity. It may be understood that the first housing and the second housing have sufficient structural strength, can protect the internal lidar module therein, and can be waterproof and dust-proof, to prevent contaminants in an external environment from entering the cavity.

The first housing includes a window region, and the window region is configured to allow laser light emitted by or laser light received by the lidar to pass through. It may be understood that, the window region needs to be made of a light-transmissive material to meet an optical performance requirement, to allow laser light to pass through. Laser light emitted inside the lidar may be emitted out of the lidar through the window region, and reflected in the external environment. The reflected laser light may enter the lidar through the window region.

The first housing has a continuous curved surface, and an included angle between a tangent plane of any point in the window region and a horizontal plane is less than 45°. The first housing has a smooth appearance.

In this embodiment of this application, the first housing is disposed to have a continuous curved surface, and the included angle between the tangent plane of any point in the window region and the horizontal plane is less than 45°, so that the first housing has smooth exterior lines, and the first housing is more flattened. When the lidar in this embodiment of this application is mounted on a vehicle, the lidar can be better integrated with an appearance of the vehicle, without an appearance decorative cover to be disposed outside the lidar, thereby simplifying a mounting procedure and facilitating mounting. In addition, the lidar does not significantly protrude from the vehicle, thereby effectively reducing visual obtrusiveness of the lidar. This helps improve aesthetic appeal of the vehicle, and can also effectively reduce wind resistance to the vehicle, thereby improving overall vehicle performance of the vehicle.

In a possible implementation, the internal lidar module is fastened to a bottom plate of the second housing, and a distance between the first housing and the bottom plate of the second housing in a first direction is less than or equal to a threshold. In this embodiment of this application, the distance between the first housing and the bottom plate of the second housing in the first direction is set to be less than or equal to the threshold, so that a size of the lidar in the first direction is smaller, the lidar is more flattened, and when mounted on the vehicle, the lidar does not significantly protrude from the vehicle.

In a possible implementation, the continuous curved surface of the first housing is a curved surface with G2 curvature or a curved surface with G3 curvature. An exterior surface is disposed as a curved surface with G2 curvature or a curved surface with G3 curvature, so that the curvature of the continuous curved surface of the first housing changes more smoothly, and the continuous curved surface of the first housing has a smoother visual effect. When the lidar in this embodiment of this application is mounted on the vehicle, the lidar can be better integrated with the appearance of the vehicle, and the lidar does not significantly protrude from the vehicle. This helps improve the aesthetic appeal of the vehicle, and can also effectively reduce wind resistance to the vehicle.

In a possible implementation, an included angle between a tangent plane at a laser incidence point of the window region and laser light entering the lidar from the incidence point is greater than or equal to 15°. For example, the included angle between the tangent plane at the laser incidence point of the window region and the laser light entering the lidar from the incidence point may be 20°, 25°, 30°, 35°, 40°, or the like. In this embodiment of this application, the included angle between the tangent plane at the laser incidence point of the window region and the laser light entering the lidar from the incidence point is set to be greater than or equal to 15°, so that the first housing has smooth exterior lines, and can meet a requirement for laser transmission. If the included angle between the tangent plane at the laser incidence point of the window region and the laser light entering the lidar from the incidence point is less than 15°, a proportion of laser light that is emitted inside the lidar and that passes through the window region is relatively small, and a proportion of laser light that is reflected by the window region and thus unable to exit is increased, which affects a function of the lidar, reduces accuracy of the lidar, and affects performance of the vehicle.

In a possible implementation, the first housing is an integrally formed structure. In this embodiment of this application, the first housing is disposed to have an integrally formed structure, so that a manufacturing procedure of the first housing is simplified, structural strength of the first housing is high, and the aesthetic appeal of the first housing is improved.

In a possible implementation, the first housing includes a cover region, and a material of the cover region is the same as a material of the window region. Using the same material for the window region and the cover region helps improve the aesthetic appeal of the first housing. Both the window region and the cover region may be made of glass or plastic. For example, both the window region and the cover region may be formed by using polycarbonate through an injection molding process. It may be understood that, when the window region and the cover region are integrally formed by using a same material, there is no boundary between the window region and the cover region.

In a possible implementation, the first housing includes a cover region, the cover region is a non-light-transmissive region, and the window region is configured to allow laser light to pass through and reduce transmission of light rays other than the laser light. The cover region is a non-light-transmissive region, so that interference of light rays in the external environment to the lidar can be avoided. The window region is configured to allow laser light to pass through and reduce transmission of the light rays other than the laser light, so that interference of light rays in another frequency band such as visible light to the lidar can be avoided.

In a possible implementation, the material of the cover region is different from the material of the window region. For example, the window region is made of plastic, and the cover region is made of metal. The cover region may be used as an embedded part, and is disposed in a mold for forming the first housing. The plastic is melted into a molten state at a high temperature, and the high-temperature liquid plastic is injected into the mold. In a process of cooling the high-temperature liquid plastic to form the window region, the window region is fastened to the cover region, to form an integrally formed structure of the window region and the cover region, so as to implement seamless embedding of the cover region into the window region. In this embodiment of this application, an integrated structure is formed through an insert molding process, resulting in a simplified manufacturing procedure. In another embodiment, the window region may be made of glass, the cover region may be made of metal, and the window region and the cover region may be assembled and fastened in a manner such as adhesive bonding.

In a possible implementation, the first housing is of an N-sided polygonal structure, N is an integer greater than or equal to 3 and less than or equal to 6, and each corner of the first housing is arc-shaped, or the first housing is of a circular structure, or the first housing is of an elliptical structure. In this embodiment of this application, the first housing is disposed to have an N-sided polygonal structure, or the first housing is disposed as a circular structure, or the first housing is disposed as an elliptical structure, so that the first housing has smooth exterior lines. For example, the first housing may be of a four-sided polygonal structure, four corners of the first housing are all arc-shaped, and four edges of the first housing may alternatively be curves, so that the first housing has smooth exterior lines. When the lidar is mounted on the vehicle, the lidar can be integrated with the appearance of the vehicle, to meet an appearance requirement of the vehicle. In addition, the first housing may alternatively be of a seven-sided polygonal structure, an eight-sided polygonal structure, a nine-sided polygonal structure, or the like. This is not limited in this embodiment of this application.

In a possible implementation, the internal lidar module includes a laser transceiver module, a beam scanning module, and a processing module. The laser transceiver module is configured to emit laser light and receive laser light. The beam scanning module is configured to perform point-by-point scanning on a laser beam generated by the laser transceiver module, so that the laser beam hits different positions on a target detected object at different moments. The processing module is configured to process and calculate signals, complete three-dimensional image reconstruction, and obtain information such as a distance, a spatial angle, and a speed of the target detected object.

In a possible implementation, the second housing includes the bottom plate, a first side plate, a second side plate, and a third side plate, the first side plate, the second side plate, and the third side plate are sequentially disposed around edges of the bottom plate, the first side plate and the third side plate are disposed opposite to each other, the bottom plate includes a first plate body and a second plate body, the first plate body is located between the second plate body and the second side plate, the internal lidar module is located on the first plate body, and the second plate body is bent relative to the first plate body in a direction away from the first housing. In this embodiment of this application, the second plate body is disposed to bend relative to the first plate body in the direction away from the first housing, to prevent the second plate body from blocking laser light emitted by the internal lidar module, thereby ensuring that the laser light can pass through the window region, and a function of the lidar is not affected.

In a possible implementation, the second housing may be formed into an integrated structure by using an injection molding process, so that a manufacturing procedure is simplified, manufacturing costs are reduced, and the second housing has relatively high strength. In another implementation, the bottom plate, the first side plate, the second side plate, and the third side plate of the second housing may alternatively be of split structures, and are assembled and fastened in a manner such as adhesive bonding or welding. A material of the second housing may be metal, and the metal has an excellent heat-conducting property. An element such as a laser in the internal lidar module generates a large amount of heat. The second housing is made from metal, so that the heat can be effectively dissipated in a timely manner, thereby preventing the performance of the lidar from being affected by excessively high internal heat of the lidar.

In a possible implementation, the first housing includes a cover region, the cover region is plated with a transmission-reducing coating, and the transmission-reducing coating is configured to reduce external laser light entering the lidar. It may be understood that, the laser light in the external environment herein refers to laser light that is not emitted from inside the lidar, for example, may be a light ray from sunlight or from a substance other than the lidar. When an external light ray in a same wavelength band as the laser light enters the lidar and is received by a receiver of the internal lidar module, the performance of the lidar is affected, causing interference to the lidar. In this embodiment of this application, the transmission-reducing coating is disposed on the cover region, so that the external light ray in the same wavelength band as the laser light can be effectively reduced from entering the lidar, thereby helping improve function accuracy of the lidar.

In a possible implementation, the lidar may include an anti-reflection coating, the anti-reflection coating is fastened to the window region, and the anti-reflection coating is configured to increase laser light that is emitted by the lidar, reflected by the external environment, and then enters the lidar. The laser of the internal lidar module emits laser light, and the laser light is emitted out of the lidar through a window. The laser light strikes a tree, a road, a bridge, a building, or the like on the ground, and a part of the laser light is reflected and enters the receiver of the internal lidar module through the window region. The anti-reflection coating can increase a proportion of laser light that is emitted by the lidar and reflected by the external environment and that passes through the window region, thereby improving accuracy of the lidar.

In a possible implementation, the lidar includes a cable and a connector, the connector is fastened to the second housing, the cable is configured to connect the connector to an external power supply, an edge region of the first housing protrudes from an edge of the second housing, and the edge region covers at least a part of a structure that is of the cable and that is located outside the second housing. It may be understood that, when the lidar is mounted on the vehicle, the vehicle is provided with a through hole, one end of the cable is connected to the second housing, the cable passes through the through hole, and the other end of the cable is connected to a power supply in the vehicle. Exposing the cable in the external environment will shorten the service life of the cable. In this embodiment of this application, the edge region of the first housing is disposed to cover at least a part of the structure that is of the cable and that is located outside the second housing, so that the cable can be protected, to provide a waterproofing function, thereby prolonging the service life of the cable.

According to a second aspect, this application provides a vehicle, including the lidar according to any one of the foregoing implementations. The vehicle may be a gasoline vehicle or an electric vehicle, for example, a battery electric vehicle, an extended-range electric vehicle, a hybrid electric vehicle, a fuel cell electric vehicle, or a new energy vehicle. This is not limited in this application.

In a possible implementation, the vehicle includes a windshield and a roof, and the lidar is located between the windshield and the roof. The lidar may be located between the windshield and the roof, that is, the lidar is located at a top position of the vehicle. The lidar is located at the top position of the vehicle, to have a good field of view, so that a better detection effect can be achieved and the lidar is not easily blocked by an object. In addition, the lidar is located at the top position of the vehicle, so that impact of most scratching and collision accidents on the lidar can be avoided.

In a possible implementation, the vehicle includes a crossbeam, the crossbeam is located between the windshield and the roof, the crossbeam includes a recess, and the lidar is fastened to the recess. The crossbeam can support the roof, increase rigidity of the roof, and reduce vibration of the vehicle during driving. The lidar in this embodiment of this application is accommodated in the recess, and the periphery of the lidar may adapt to the periphery of the recess, enabling the lidar to be mounted on the vehicle.

In a possible implementation, the vehicle includes an indicator, the indicator is located in the cavity, and the indicator is configured to indicate an automated driving status of the vehicle. For example, the vehicle may include an automated driving unit, and the indicator may be configured to display the automated driving status of the vehicle. When the vehicle does not enable an automated driving function, the indicator may be off. When the vehicle enables the automated driving function, the indicator emits light, for example, green light. Alternatively, when the vehicle does not enable the automated driving function, the indicator displays blue light, and when the vehicle enables the automated driving function, the indicator displays green light. The indicator may also be configured to indicate a status of another component. This is not limited in this embodiment of this application. In this embodiment of this application, the indicator is disposed in the lidar, so that integration between the lidar and the indicator can be implemented, to avoid disposing the indicator separately and occupying excessive space of the vehicle, thereby increasing structural complexity of the vehicle.

In a possible implementation, the vehicle includes a camera, and the camera is located in the cavity. The camera may be a front-facing camera, or may be another type of camera. In this embodiment of this application, the camera is disposed in the lidar, to implement integration between the camera and the lidar, so that space for mounting the camera on the vehicle can be released. A quantity of cameras in the lidar may be one, two, three, or the like, which is not limited in this embodiment of this application, and may be set according to a requirement.

In a possible implementation, the windshield is provided with a notch, and the recess is embedded in the notch. The notch may be of a shaped structure. It may be understood that, the recess is embedded in the notch, so that the lidar mounted to the recess is embedded in the notch. After the lidar in this embodiment of this application is mounted on the vehicle, a height of the lidar protruding from the windshield is smaller. After the lidar is embedded in the notch, the lidar is closer to the front of the vehicle, and may be covered by spraying of a washer fluid or covered by a windshield wiper. When the vehicle cleans the windshield, the lidar may be cleaned.

In a possible implementation, the vehicle includes a vibration damping apparatus, and the vibration damping apparatus may be located inside the lidar, to implement integration between the vibration damping apparatus and the lidar. Alternatively, the vibration damping apparatus may be located outside the lidar.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a structural diagram of a vehicle according to an implementation of this application;
FIG. 2 is a diagram of a partial structure of the vehicle shown in FIG. 1;
FIG. 3 is an exploded view diagram of the partial structure of the vehicle shown in FIG. 2;
FIG. 4 is an exploded view diagram of the partial structure of the vehicle shown in FIG. 2;
FIG. 5 is a diagram of a partial structure of a vehicle;
FIG. 6 is a structural diagram of a lidar shown in FIG. 2;
FIG. 7 is an exploded view diagram of the lidar shown in FIG. 6;
FIG. 8 is a structural diagram of a first housing shown in FIG. 7 from another perspective view;
FIG. 9 is a structural diagram of a partial structure of a vehicle according to an implementation of this application; and
FIG. 10 is a structural diagram of the lidar shown in FIG. 7 from another perspective view.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

It should be understood that, "first", "second", and the like used in this application are merely used for distinguishing and description, but cannot be understood as an indication or implication of relative importance or an indication or implication of a sequence.

In the descriptions of this application, an orientation or a position relationship indicated by the term "upper", "lower", "left", "right", or the like is an orientation or a position relationship based on the accompanying drawings, and is merely intended for ease of describing this application and simplifying description, but does not indicate or imply that a specified apparatus or element needs to have a specific orientation or needs to be constructed and operated in a specific orientation. Therefore, such terms cannot be understood as a limitation on this application.

In the descriptions of this application, it should be noted that, unless otherwise clearly specified and limited, the term "connection" should be understood in a broad sense, for example, may be fixed connection, or may be detachable connection, or may be abutting connection or integrated connection. A person of ordinary skill in the art may understand specific meanings of the foregoing terms in this application based on specific cases.

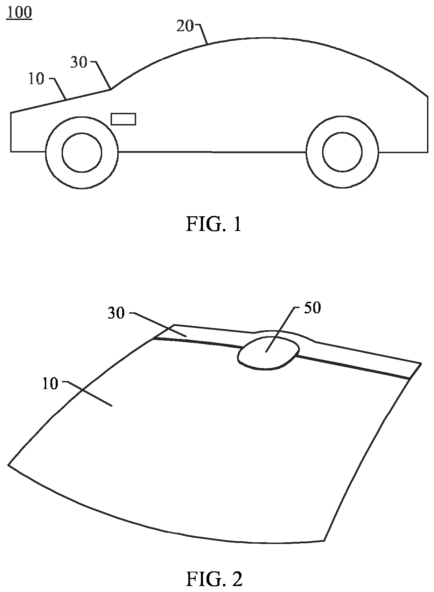

As shown in FIG. 1, FIG. 1 is a structural diagram of a vehicle 100. The vehicle 100 may be a gasoline vehicle or an electric vehicle, for example, a battery electric vehicle, an extended-range electric vehicle, a hybrid electric vehicle, a fuel cell electric vehicle, or a new energy vehicle. This is not limited in this application. The vehicle 100 may have an automated driving function.

The vehicle 100 may include a windshield 10, a roof 20, and a crossbeam 30. The crossbeam 30 is fastened between the windshield 10 and the roof 20. A material of the windshield 10 may be glass, and the windshield 10 may be made by mounting a plurality of layers of acrylic glass onto a framework. The windshield 10 may be located at the front of a cab. The windshield 10 has sufficient strength to ensure that a driver is not injured by an air flow and an external impact object. The windshield 10 has sufficient transparency, to provide a clear field of view for the driver. The windshield 10 may be equipped with a rain wiper and a water and fog resistant apparatus to ensure timely removal of rain, fog, snow, and ice.

A material of the roof 20 may be glass, metal, or the like. The roof 20 is located above the cab. The roof 20 needs to have sufficient strength to ensure safety of the driver. The roof 20 may further play a role of decoration, sound insulation, and heat insulation.

The crossbeam 30 can support the roof 20, increase rigidity of the roof 20, and reduce vibration of the vehicle 100 during driving. When the vehicle 100 is collided, the crossbeam 30 can transfer and disperse a collision force, to avoid collision force concentration and reduce damage to the vehicle 100.

In some embodiments, the vehicle 100 may alternatively not include the crossbeam 30, and the windshield 10 is connected to the roof 20. It may be understood that, the windshield 10 and the roof 20 may be made of a same material, and the windshield 10 and the roof 20 may form an integrally formed structure. For example, both the windshield 10 and the roof 20 may be made of a glass material and formed into an integrated structure through injection molding or another process. In another implementation, the windshield 10 and the roof 20 may alternatively be of split structures, and are assembled and fastened in a manner such as adhesive bonding.

The vehicle 100 in FIG. 1 is merely a schematic representation. A size, a shape, a structure, and the like of the vehicle 100 may be set according to a requirement. A specific structure of the vehicle 100 is not limited in this application.

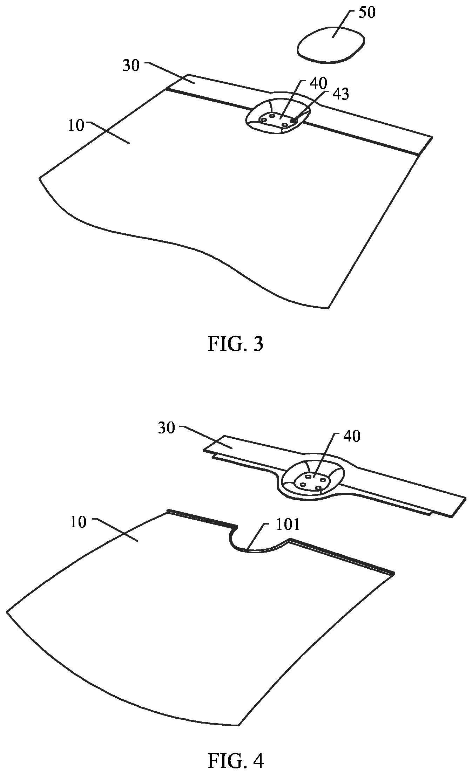

As shown in FIG. 2, FIG. 3, and FIG. 4, FIG. 2 is a diagram of a partial structure of the vehicle 100 shown in FIG. 1, FIG. 3 is an exploded view diagram of the partial structure of the vehicle 100 shown in FIG. 2, and FIG. 4 is an exploded view diagram of the partial structure of the vehicle 100 shown in FIG. 2. A lidar 50 is a system that emits laser beams to detect characteristic parameters, such as distance, direction, height, speed, posture, and shape, of a target. The lidar 50 can play an important role in assisting driving safety. Through high-precision positioning and local point-cloud information extraction, the lidar 50 provides more accurate positional information. Through the lidar 50, preliminary positioning, position memorization, and position management of the vehicle 100 can be implemented, thereby improving the driving safety.

The lidar 50 may be mounted on the vehicle 100. For example, the lidar 50 may be located at a top position of the vehicle 100. When the lidar 50 is located at the top position of the vehicle 100, because a mounting position is high, a field of view is good, and a farther target may be detected. Therefore, a better detection effect is achieved and the lidar is not easily blocked by an object. In addition, the lidar 50 is located at the top position of the vehicle 100, so that impact of most scratching and collision accidents on the lidar 50 can be avoided. For example, the lidar 50 may be located between the windshield 10 and the roof 20.

In some embodiments, the lidar 50 may be mounted on the crossbeam 30. The crossbeam 30 may include a recess 40, and the lidar 50 is fastened to the recess 40. An edge of the lidar 50 is adapted to and conforms closely to an edge of the recess 40. The lidar 50 in this embodiment of this application is accommodated in the recess 40, and the periphery of the lidar 50 may adapt to the periphery of the recess 40, enabling the lidar 50 to be mounted on the vehicle 100 and integrated with an appearance of the vehicle 100 without an appearance decorative cover to be mounted outside the lidar 50.

In another embodiment, the lidar 50 may alternatively be located on a side part of the vehicle 100 or at another position on the vehicle 100. Specifically, the lidar may be disposed according to a requirement. This is not limited in this embodiment of this application.

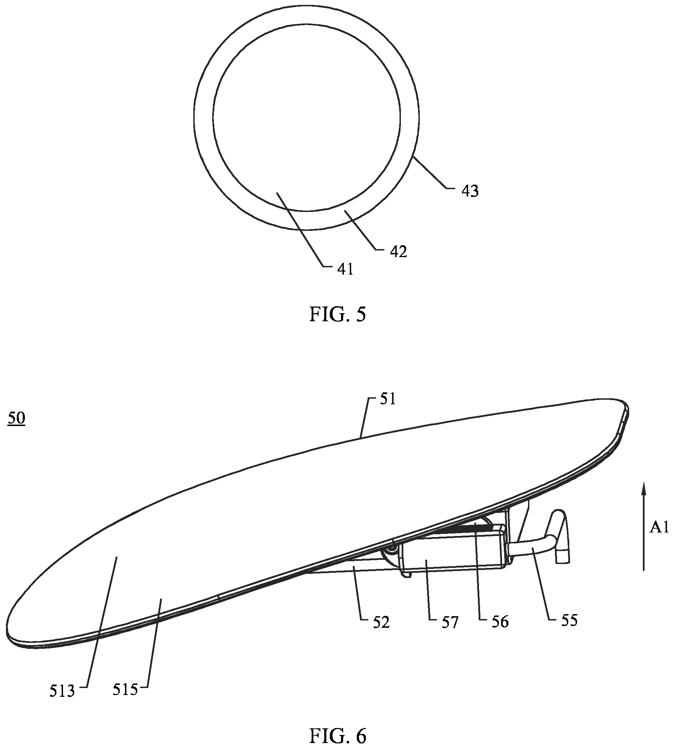

Refer to FIG. 3, FIG. 4, and FIG. 5. FIG. 5 is a diagram of a partial structure of the vehicle 100. The vehicle 100 may include a fastener 41 and a sealing ring 42. A mounting hole 43 is disposed in the recess 40. The fastener 41 is located in the mounting hole 43 and is fastened to the lidar 50. The sealing ring 42 is located between the fastener 41 and a hole wall of the mounting hole 43. The fastener 41 may be a mechanical part such as a screw or a bolt. In this embodiment of this application, the sealing ring 42 is disposed between the fastener 41 and the mounting hole 43, and the sealing ring 42 can block a gap between the mounting hole 43 and the fastener 41, which helps prevent dust, water, or other external contaminants from entering the vehicle 100 through the gap between the mounting hole 43 and the fastener 41. For example, the sealing ring 42 may be a rubber ring.

It may be understood that a quantity of mounting holes 43 may be one, two, three, four, five, or the like. FIG. 3 shows an example in which the quantity of mounting holes 43 is four, the four mounting holes 43 may be distributed in four corner regions of the lidar 50, a corresponding quantity of fasteners 41 is also four, and the four fasteners 41 are distributed in the four corner regions of the lidar 50, which facilitates convenient mounting of the lidar 50 to the recess 40 and is beneficial to stable connection. Increasing the quantities of mounting holes 43 and fasteners 41 helps improve stability of the lidar 50 on the vehicle 100, increase connection strength between the lidar 50 and the vehicle 100, and prevent the lidar 50 from easily falling off from the vehicle 100 and damaging the lidar 50 when the vehicle 100 collides.

It may be understood that, during mounting of the lidar 50, the lidar 50 may be placed in the recess 40, and then the lidar 50 is fastened to the recess 40 from the cab by using the fastener 41. Alternatively, the lidar 50 may be fastened to the vehicle 100 in an adhesive bonding, welding, or another manner. A manner of mounting the lidar 50 is not limited in this embodiment of this application.

Refer to FIG. 4. The windshield 10 may be provided with a notch 101, and the recess 40 is embedded in the notch 101. The notch 101 may be of a U-shaped structure. It may be understood that, the recess 40 is embedded in the notch 101, so that the lidar 50 mounted to the recess 40 is embedded in the notch 101. After the lidar 50 (refer to FIG. 6) in this embodiment of this application is mounted on the vehicle 100, a height of the lidar 50 protruding from the windshield 10 is smaller. After the lidar 50 is embedded in the notch 101, the lidar 50 is closer to the front of the vehicle 100, and may be covered by spraying of a washer fluid or covered by a windshield wiper. When the vehicle 100 cleans the windshield 10, the lidar 50 may be cleaned.

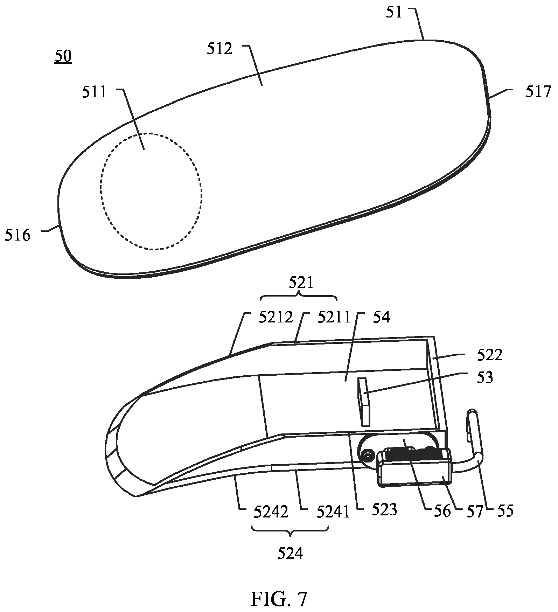

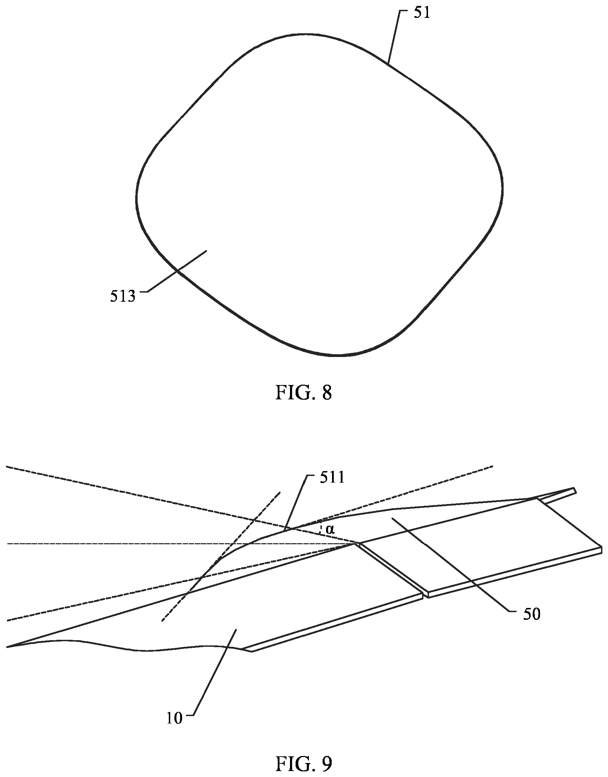

As shown in FIG. 6, FIG. 7, and FIG. 8, FIG. 6 is a structural diagram of the lidar 50 shown in FIG. 2, FIG. 7 is an exploded view diagram of the lidar 50 shown in FIG. 6, and FIG. 8 is a structural diagram of a first housing 51 shown in FIG. 7 from another perspective view. The lidar 50 may include the first housing 51, a second housing 52, and an internal lidar module 53. The first housing 51 and the second housing 52 may be stacked, and the first housing 51 and the second housing 52 may define an enclosed cavity 54.

The internal lidar module 53 is located in the cavity 54. For example, the internal lidar module 53 may be fastened to a side that is of the second housing 52 and that faces the first housing 51. It may be understood that, after the first housing 51 in FIG. 7 covers the second housing 52, the enclosed cavity 54 is formed. In FIG. 7, the lidar 50 is disassembled merely to show an internal structure of the lidar 50. FIG. 7 shows a part of the cavity 54.

In some embodiments, the first housing 51 and the second housing 52 need to have sufficient structural strength, can protect the internal lidar module 53 therein, and can be waterproof and dust-proof, to prevent contaminants in an external environment from entering the cavity 54.

In some embodiments, the internal lidar module 53 may include components such as a laser transceiver module, a beam scanning module, and a processing module. The laser transceiver module is configured to emit laser light and receive laser light. The beam scanning module is configured to perform point-by-point scanning on a laser beam generated by the laser transceiver module, so that the laser beam hits different positions on a target detected object at different moments. The processing module is configured to process and calculate signals, complete three-dimensional image reconstruction, and obtain information such as a distance, a spatial angle, and a speed of the target detected object. The internal lidar module 53 may further be provided with a circuit board.

It may be understood that, a laser of the laser transceiver module of the internal lidar module 53 emits laser light, and the laser light hits a tree, a road, a bridge, a building, or the like on the ground, and causes scattering. A part of the laser light is reflected to a receiver of the laser transceiver module. A distance from the lidar 50 to a target point is obtained through calculation according to a laser ranging principle. The laser light continuously scans a target object, so that data of all target points on the target object can be obtained. After imaging processing is performed by using the data, a precise three-dimensional image can be obtained.

Refer to FIG. 7. The second housing 52 may include a bottom plate 524, a first side plate 521, a second side plate 522, and a third side plate 523. The first side plate 521, the second side plate 522, and the third side plate 523 are sequentially disposed around edges of the bottom plate 524, and the first side plate 521 and the third side plate 523 are disposed opposite to each other. The bottom plate 524 may include a first plate body 5241 and a second plate body 5242, and the first plate body 5241 is located between the second plate body 5242 and the second side plate 522. The internal lidar module 53 is fastened to the first plate body 5241. The first plate body 5241 is typically in a flat shape.

Refer to FIG. 7. The first housing 51 may include a window region 511. The window region 511 needs to meet a light transmission performance requirement. The window region 511 is configured to allow laser light emitted by or laser light received by the lidar to pass through. Laser light emitted inside the lidar 50 may be emitted out of the lidar 50 through the window region 511, and reflected in the external environment. The reflected laser light may enter the lidar 50 through the window region 511.

The first housing 51 may include a cover region 512, and the cover region 512 may surround at least a part of the window region 511. For example, when the window region 511 does not include an edge of the housing 51, that is, when the window region 511 is located in the middle of the first housing 51, the cover region 512 surrounds an edge of the entire window region 511. In another embodiment, when the window region 511 includes a part of the edge of the housing 51, the cover region 512 surrounds a part of the window region 511.

The first housing 51 has a continuous curved surface, and an included angle between a tangent plane of any point in the window region 511 and a horizontal plane is less than 45°. The horizontal plane may be understood as a ground plane. The included angle between the tangent plane of any point in the window region 511 and the horizontal plane is an included angle between the tangent plane of any point in the window region 511 and the ground plane. For example, when the lidar 50 is mounted at the top position of the vehicle 100, if the first plate body 5241 is parallel to the ground plane, the horizontal plane is parallel to the first plate body 5241.

It may be understood that, a surface that is of the first housing 51 and that is away from the second housing 52 is an exterior surface 513, and the exterior surface 513 is a continuous curved surface. A degree of integration between the exterior surface 513 of the first housing 51 and an exterior surface around the recess 40 is relatively high.

In this embodiment of this application, the first housing 51 is disposed to have a continuous curved surface, and the included angle between the tangent plane of any point in the window region 511 and the horizontal plane is less than 45°, so that the first housing 51 has smooth exterior lines, and the first housing 51 is more flattened. When the lidar 50 in this embodiment of this application is mounted on the vehicle 100, the lidar 50 can be better integrated with the appearance of the vehicle 100. A protrusion height of the lidar 50 is relatively small, so that an exposed structure of the lidar 50 is close to or consistent with a streamlined shape of the vehicle 100. The lidar 50 does not significantly protrude from the vehicle 100. This effectively reduces visual obtrusiveness of the lidar 50, helps improve aesthetic appeal of the vehicle 100, and can also effectively reduce wind resistance to the vehicle 100, thereby improving overall vehicle performance of the vehicle 100.

Refer to FIG. 2 and FIG. 6. When the lidar 50 in this embodiment of this application is mounted on the vehicle 100, the periphery of the first housing 51 can well adapt to and be integrated with the recess 40 and structures (for example, the windshield 10 and the roof 20) around the recess 40, to form a complete exterior surface, and an appearance decorative cover does not need to be disposed outside the lidar 50 (when the lidar cannot be well integrated with the vehicle, an appearance decorative cover needs to be added outside the lidar to enclose the lidar, so as to improve the aesthetic appeal of the vehicle), thereby simplifying a mounting procedure and facilitating simple mounting.

In some embodiments, the first housing 51 may be an integrally formed structure. For example, a material of the cover region 512 may be the same as a material of the window region 511. Both the window region 511 and the cover region 512 may be made of plastic, and are formed into an integrated mechanical part through an injection molding process. For example, both the window region 511 and the cover region 512 may be formed by using polycarbonate through an injection molding process. Using the same material for the window region 511 and the cover region 512 helps improve the aesthetic appeal of the first housing 51. In another embodiment, both the window region 511 and the cover region 512 may be made of glass.

It may be understood that, when the window region 511 and the cover region 512 are integrally formed by using a same material, there is no boundary between the window region 511 and the cover region 512. A dashed line in FIG. 7 is merely an example to indicate that this region configured to allow laser light to pass through is a window region, and does not indicate that the dashed line is a boundary between the window region 511 and the cover region 512.

In this embodiment of this application, the first housing 51 is disposed to have an integrally formed structure, so that a manufacturing procedure of the first housing 51 is simplified, manufacturing costs of the lidar 50 are reduced, structural strength of the first housing 51 is high, and the aesthetic appeal of the first housing 51 is improved.

In another embodiment, the window region 511 and the cover region 512 may alternatively be made of different materials. For example, the window region 511 is made of plastic, and the cover region 512 is made of metal. When the window region 511 is made of plastic and the cover region 512 is made of metal, the cover region 512 may be used as an embedded part, and disposed in a mold used for forming the first housing 51. The plastic is melted into a molten state at a high temperature, and the high-temperature liquid plastic is injected into the mold. In a process of cooling the high-temperature liquid plastic to form the window region 511, the window region 511 is fastened to the cover region 512, to form an integrally formed structure of the window region 511 and the cover region 512, so as to implement seamless embedding of the cover region 512 into the window region 511. In this embodiment of this application, the window region 511 and the cover region 512 may be formed into an integrated structure by using an insert molding process, and structural strength is high.

In another embodiment, the window region 511 may be made of glass, the cover region 512 may be made of metal, and the window region 511 and the cover region 512 may be assembled and fastened through adhesive bonding. In another embodiment, the window region 511 may be made of glass, and the cover region 512 may be made of plastic; or the window region 511 may be made of plastic, and the cover region 512 may be made of glass. The window region 511 and the cover region 512 may be assembled and fastened through adhesive bonding.

In some embodiments, the window region 511 and the cover region 512 may be of split structures, and may be assembled and fastened as the first housing 51 in a manner such as adhesive bonding.

In some embodiments, the cover region 512 is a non-light-transmissive region, and the window region 511 is configured to allow laser light to pass through and reduce transmission of light rays other than the laser light. The cover region 512 is a non-light-transmissive region, so that interference of light rays in the external environment to the lidar 50 can be avoided. The window region 511 is configured to allow laser light to pass through and reduce transmission of the light rays other than the laser light, so that interference of light rays in another frequency band such as visible light to the lidar 50 can be avoided.

In some embodiments, the continuous curved surface of the first housing 51 may be a curved surface with G3 curvature. It may be understood that, the exterior surface 513 is a curved surface with G3 curvature. G3 curvature refers to continuity of a change rate of curvature of a curved surface or a curve. It may be understood that, the curved surface with G3 curvature is a tangent continuous curved surface. In this embodiment of this application, the continuous curved surface of the first housing 51 is set to a curved surface with G3 curvature, so that the curvature of the continuous curved surface of the first housing 51 changes more smoothly, the continuous curved surface of the first housing 51 has a smoother visual effect, and the entire lidar 50 is more flattened. When the lidar 50 in this embodiment of this application is mounted on the vehicle 100, the lidar 50 can be better integrated with the appearance of the vehicle 100, and the lidar 50 does not significantly protrude from the vehicle 100. This reduces visual obtrusiveness of the lidar 50, helps improve aesthetic appeal of the vehicle 100, and can also effectively reduce wind resistance to the vehicle 100.

In another implementation, the continuous curved surface of the first housing 51 may alternatively be a curved surface with G2 curvature, and may be specifically set according to a requirement. This is not limited in this embodiment of this application. It may be understood that, the exterior surface 513 may be a curved surface with G2 curvature. G2 curvature may be understood as point-to-point continuity of a curved surface or a curve with continuous curvature.

In some embodiments, the first housing 51 may be of an N-sided polygonal structure, N is an integer greater than or equal to 3 and less than or equal to 6, and each corner of the first housing 51 is arc-shaped. For example, with reference to FIG. 8, the first housing 51 may be of a four-sided polygonal structure, four corners of the first housing 51 are all arc-shaped, and four edges of the first housing 51 may alternatively be curves, so that the first housing 51 has smooth exterior lines. When the lidar 50 is mounted on the vehicle 100, the lidar 50 can be integrated with the appearance of the vehicle 100, to meet an appearance requirement of the vehicle 100.

In another embodiment, the first housing 51 may be of a three-sided polygonal structure, three corners of the first housing 51 are all arc-shaped; or the first housing 51 may be of a five-sided polygonal structure, and five corners of the first housing 51 are all arc-shaped; or the first housing 51 may be of a six-sided polygonal structure, and six corners of the first housing 51 are all arc-shaped. In addition, the first housing 51 may alternatively be of a seven-sided polygonal structure, an eight-sided polygonal structure, a nine-sided polygonal structure, or the like. This is not limited in this embodiment of this application.

In some embodiments, the first housing 51 may be of a circular structure, and the first housing 51 with the circular structure has a smooth edge. When mounted on the vehicle 100, the lidar 50 can be integrated with the appearance of the vehicle 100, to prevent the lidar 50 from being excessively prominent on the vehicle 100 after being mounted on the vehicle 100, so that the appearance of the vehicle 100 is not affected.

In some embodiments, the first housing 51 may be of an elliptical structure, and the first housing 51 with the elliptical structure has a smooth edge. When mounted on the vehicle 100, the lidar 50 can be integrated with the appearance of the vehicle 100, to prevent the lidar 50 from being excessively prominent on the vehicle 100 after being mounted on the vehicle 100, so that the appearance of the vehicle 100 is not affected.

As shown in FIG. 9, FIG. 9 is a structural diagram of a partial structure of the vehicle 100. An included angle α between a tangent plane at a laser incidence point of the window region 511 and laser light entering the lidar 50 from the incidence point is greater than or equal to 15°. For example, the included angle α between the tangent plane at the laser incidence point of the window region 511 and the laser light entering the lidar 50 from the incidence point may be 20°, 25°, 30°, 35°, 40°, or the like. In this embodiment of this application, the included angle α between the tangent plane at the laser incidence point of the window region 511 and the laser light entering the lidar 50 from the incidence point is set to be greater than or equal to 15°, so that the first housing 51 has smooth exterior lines, and can meet a requirement for laser transmission. If the included angle α between the tangent plane at the laser incidence point of the window region 511 and the laser light entering the lidar 50 from the incidence point is less than 15°, a proportion of the laser light that is emitted inside the lidar 50 and that passes through the window region 511 is relatively small, and a proportion of the laser light that is reflected by the window region 511 and thus unable to exit is increased, which affects a function of the lidar 50, reduces accuracy of the lidar 50, and affects performance of the vehicle 100.

In some embodiments, the lidar 50 may include an anti-reflection coating, the anti-reflection coating is fastened to the window region 511, and the anti-reflection coating is configured to increase laser light that is emitted by the lidar 50, reflected by the external environment, and then enters the lidar 50. The laser of the internal lidar module 53 emits laser light, and the laser light is emitted out of the lidar 50 through the window region 511. The laser light strikes a tree, a road, a bridge, a building, or the like on the ground, and a part of the laser light is reflected and enters the receiver of the internal lidar module 53 through the window region 511. The anti-reflection coating can increase a proportion of laser light that is emitted by the lidar 50 and reflected by the external environment and that passes through the window region 511, thereby improving accuracy of the lidar 50.

In some embodiments, the lidar 50 may include a transmission-reducing coating, the cover region 512 is plated with the transmission-reducing coating, and the transmission-reducing coating is used to reduce external laser light entering the lidar 50. It may be understood that, the laser light in the external environment herein refers to laser light that is not emitted from inside the lidar 50, for example, may be a light ray from sunlight or from a substance other than the lidar 50. When an external light ray in a same wavelength band as the laser light enters the lidar 50 and is received by a receiver of the internal lidar module 53, the performance of the lidar 50 is affected, causing interference to the lidar 50. In this embodiment of this application, the transmission-reducing coating is disposed on the cover region 512, so that the external light ray in the same wavelength band as the laser light can be effectively reduced from entering the lidar 50, thereby helping improve function accuracy of the lidar 50.

Refer to FIG. 7. In some embodiments, the second plate body 5242 of the bottom plate 524 is bent relative to the first plate body 5241 in a direction away from the first housing 51. In this embodiment of this application, the second plate body 5242 is disposed to bend relative to the first plate body 5241 in the direction away from the first housing 51, to prevent the second plate body 5242 from blocking laser light emitted by the internal lidar module 53, thereby ensuring that the laser light can pass through the window region 511, and a function of the lidar 50 is not affected.

Refer to FIG. 3 and FIG. 7. When the lidar 50 is mounted to the recess 40, a bottom shape of the recess 40 is adapted to the bottom plate 524, and the bottom plate 524 conforms to the bottom of the recess 40 and is fastened through a fastener.

Refer to FIG. 7. In some embodiments, the second housing 52 may be formed into an integrated structure by using an injection molding process, so that a manufacturing procedure is simplified, manufacturing costs are reduced, and the second housing 52 has relatively high strength. In another implementation, the bottom plate 524, the first side plate 521, the second side plate 522, and the third side plate 523 of the second housing 52 may alternatively be of split structures, and are assembled and fastened in a manner such as adhesive bonding or welding.

A material of the second housing 52 may be metal, and the metal has an excellent heat-conducting property. An element such as a laser in the internal lidar module 53 generates a large amount of heat. The second housing 52 is made from metal, so that the heat can be effectively dissipated in a timely manner, thereby preventing the performance of the lidar 50 from being affected by excessively high internal heat of the lidar 50. The second housing 52 and the first housing 51 may be assembled and fastened in a manner such as adhesive bonding, to implement sealing and waterproof performance of the lidar 50.

In some embodiments, with reference to FIG. 6 and FIG. 7, a distance between the first housing 51 and the bottom plate 524 of the second housing 52 in a first direction A1 is less than or equal to a threshold. The first direction A1 is a direction that is perpendicular to the first plate body 5241 of the bottom plate 524. It may be understood that, the distance between the first housing 51 and the bottom plate 524 of the second housing 52 in the first direction A1 is different at different positions. In this embodiment of this application, if a maximum value of the distance between the first housing 51 and the bottom plate 524 of the second housing 52 in the first direction A1 is less than or equal to the threshold, the distance between the first housing 51 and the bottom plate 524 of the second housing 52 in the first direction Al is less than or equal to the threshold. In this embodiment of this application, the distance between the first housing 51 and the bottom plate 524 of the second housing 52 in the first direction A1 is set to be less than or equal to the threshold, so that a size of the lidar 50 in the first direction is smaller, the lidar 50 is more flattened, and when mounted on the vehicle 100, the lidar 50 does not significantly protrude from the vehicle 100. This helps improve overall aesthetic appeal of the vehicle 100 and improve user experience.

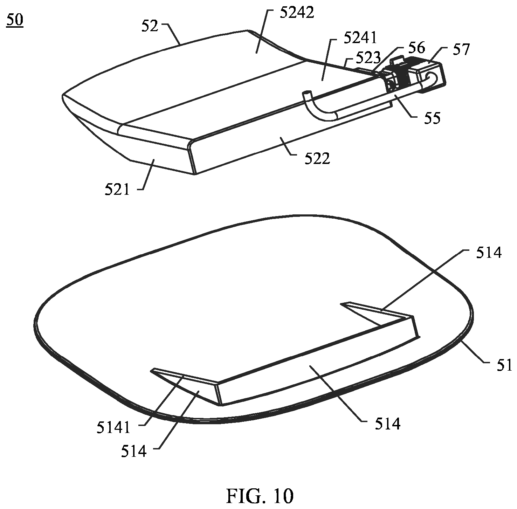

With reference to FIG. 7 and FIG. 10, FIG. 10 is a structural diagram of the lidar 50 shown in FIG. 7 from another perspective view. The first housing 51 may include a connecting plate 514. The connecting plate 514 is located on a surface that is of the first housing 51 and that faces the second housing 51, and a surface 5141 that is of the connecting plate 514 and that faces the second housing 52 is a flat surface. The quantity of connecting plates 514 may be three, and the three connecting plates 514 are respectively disposed corresponding to the first side plate 521, the second side plate 522, and the third side plate 523, and are respectively fastened to the first side plate 521, the second side plate 522, and the third side plate 523. It may be understood that, surfaces that are of the first side plate 521, the second side plate 522, and the third side plate 523 and that correspond to the connecting plates 514 are flat surfaces, to conform to and fastened to the connecting plates 514. The connecting plates 514 and the first housing 51 may be an integrally formed structure. In this embodiment of this application, the surfaces 5141 that are of the connecting plates 514 and that face the second housing 52 are disposed as flat surfaces, so that the flat surfaces of the connecting plates 514 are easily securely and reliably fastened to the flat surfaces of the first side plate 521, the second side plate 522, and the third side plate 523. In another implementation, the first housing 51 may not be provided with a connecting plate 514. It may also be understood that the three connecting plates 514 are integrally formed with the first side plate 521, the second side plate 522, and the third side plate 523, and the three connecting plates 514 are assembled and fastened to the first housing 51 in a manner such as adhesive bonding.

It may be understood that, a side that is of the second housing 52 and that faces the first housing 51 is adapted to a surface that is of the first housing 51 and that faces the second housing 52, to implement a reliable connection between the first housing 51 and the second housing 52, and prevent a gap that is between the first housing 51 and the second housing 52 and that causes water, contaminates, or the like to enter the lidar 50 to affect a function of the lidar 50 and damage the lidar 50.

Refer to FIG. 7. The first side plate 521 may include a first segment 5211 and a second segment 5212, and the first segment 5211 and the second segment 5212 are fastened. The first segment 5211 and the second segment 5212 may be of an integrated structure, or may be of split structures and are assembled and fastened in a manner such as adhesive bonding or welding.

The first housing 51 includes a first end 516 and a second end 517 that are disposed opposite to each other. The first end 516 is an end close to the window region 511, and the second end 517 is the other opposite end away from the window region 511.

A height of the second segment 5212 is lower than a height of the first segment 5211. When the first housing 51 is mounted on the second housing 52, the first housing 51 is inclined, and the first end 516 mates with the second segment 5212. After the first housing 51 is mounted on the second housing 52, the first end 516 is lower than the second end 517, which facilitates laser light to pass through the window region 511.

In some embodiments, a surface that is of the second segment 5212 and that faces the first housing 51 is adapted to an inner surface of the first housing 51. For example, the surface that is of the second segment 5212 and that faces the first housing 51 is a curved surface, to conform closely to the surface of the first housing 51.

With reference to FIG. 6, FIG. 7, and FIG. 10, the lidar 50 may include a cable 55 and a connector 56. The connector 56 is fastened to the second housing 52, and the cable 55 is configured to connect the connector 56 to an external power supply. The lidar 50 may further include a connector 57. To distinguish between the two connectors, the connector 56 is referred to as a first connector 56, and the connector 57 is referred to as a second connector 57. The second connector 57 is connected to the cable 55 and the connector 56 to implement an electrical connection between the lidar 50 and the external power supply. The external power supply may charge the lidar 50, so that a function of the lidar 50 runs normally.

The cable 55 may be fastened to the second connector 57, and the second connector 57 may be plugged into the first connector 56, to electrically connect the lidar 50 to the external power supply. The second connector 57 may also be separated from the first connector 56, to disconnect the lidar 50 from the external power supply.

In some embodiments, the first connector 56 is fastened to the third side portion 523 of the second housing 52, to facilitate plugging between the first connector 56 and the second connector 57. In another implementation, the first connector 56 may alternatively be fastened to the first side portion 521 or the second side portion 522 of the second housing 52. This is not limited in this embodiment of this application.

In some embodiments, the first connector 56 may be a female end of an electronic connector, and the second connector 57 may be a male end of the electronic connector; or the first connector 56 may be the male end of the electronic connector, and the second connector 57 may be the female end of the electronic connector.

Refer to FIG. 2 and FIG. 6. An edge region 515 of the first housing 51 protrudes from an edge of the second housing 52, and the edge region 515 covers at least a part of a structure that is of the cable 55 and that is located outside the second housing 52. When the lidar 50 is mounted on the vehicle 100, the vehicle 100 is provided with a through hole (not shown in FIG. 2 and FIG. 6), one end of the cable 55 is connected to the first connector 56 of the second housing 52, the other end of the cable 55 passes through the through hole of the vehicle 100, and the other end of the cable 55 is connected to a power supply in the vehicle 100. A part that is of the cable 55 and that is located outside the second housing 52 and outside the vehicle 100 is located below the edge region 515, and is covered by the edge region 515. A part that is of the cable 55 and that is located inside the vehicle 100 may be located below the edge region 515, or may not be located below the edge region. A cabling route of the cable 55 may be set according to a requirement. The part that is of the cable 55 and that is located outside the second housing 52 and outside the vehicle 100 is located below the edge region 515. In this way, when the lidar 50 is mounted to the recess 40 of the vehicle 100, the part that is of the cable 55 and that is located outside the second housing 52 and outside the vehicle 100 is located in space formed between the edge region 515 and the recess 40, and the cable 55 is covered by the first housing 51 and is not exposed to the external environment.

It may be understood that, exposing the cable 55 in the external environment will shorten the service life of the cable 55. In this embodiment of this application, the edge region 515 of the first housing 51 is disposed to cover at least a part of the structure that is of the cable 55 and that is located outside the second housing 52, so that the cable 55 can be protected, to provide a waterproofing function, thereby prolonging the service life of the cable 55.

In some embodiments, the vehicle 100 may include an indicator. The indicator is located in the cavity 54, and may be configured to indicate a status of a component of the vehicle 100. For example, the vehicle 100 may include an automated driving unit, and the indicator may be configured to display an automated driving status of the vehicle 100. When the vehicle 100 does not enable an automated driving function, the indicator may be off. When the vehicle 100 enables the automated driving function, the indicator emits light, for example, green light. Alternatively, when the vehicle 100 does not enable the automated driving function, the indicator displays blue light, and when the vehicle 100 enables the automated driving function, the indicator displays green light. The indicator may also be configured to indicate a status of another component. This is not limited in this embodiment of this application.

In this embodiment of this application, the indicator is disposed in the lidar 50, so that integration between the lidar 50 and the indicator can be implemented, to avoid disposing the indicator separately and occupying excessive space of the vehicle 100, thereby increasing structural complexity of the vehicle 100. In this embodiment of this application, the window region 511 and the cover region 512 each may be made of a transparent material, which provides possibility of enabling light from the indicator to pass through and can meet a mounting requirement of the indicator.

In some embodiments, the vehicle 100 may include a camera, and the camera is located in the cavity 54. The camera may be a front-facing camera, or may be another type of camera. In this embodiment of this application, the camera is disposed in the lidar 50, to implement integration between the camera and the lidar 50, so that space for mounting the camera on the vehicle 100 can be released. The camera is disposed in the lidar 50 and looks neat and beautiful as a whole, so that the camera can be prevented from being exposed in an environment, thereby effectively protecting the camera. In this embodiment of this application, the window region 511 and the cover region 512 each may be made of a transparent material, which provides possibility of disposing a camera and flexibility of mounting the camera, and can meet an optical requirement of the camera.

It may be understood that, a quantity of cameras in the lidar 50 may be one, two, three, or the like, which is not limited in this embodiment of this application, and may be set according to a requirement.

A vehicle-mounted camera may provide reliable evidence for analysis and determination of a traffic accident, and can also provide conditions of environments inside and outside a compartment, thereby providing safety assurance for driving of the vehicle 100. For example, the camera may be a vision-based perception camera. The vision-based perception camera can provide surrounding environment information for a driver, and also help implement driver assistance functions including adaptive cruise control, lane deviation warning, pedestrian and vehicle collision warning, and the like.

In some embodiments, the vehicle 100 may include a vibration damping apparatus, and the vibration damping apparatus may be located inside the lidar 50, to implement integration between the vibration damping apparatus and the lidar 50. During operation of the lidar 50, there are problems of strong vibration and high vibration noise. The vibration damping apparatus can isolate vibration from a scanning module of the lidar, so that the lidar 50 obtains better noise, vibration, and harshness performance. A motor is disposed inside the lidar 50. Vibration is generated in a rotation process of the motor, and the vibration from the motor drives the lidar 50 to vibrate, which affects performance of the lidar 50. By mounting the vibration damping apparatus inside the lidar 50, the vibration generated by the motor can be effectively reduced, noise caused by the vibration can be avoided, and function reliability of the lidar 50 can be improved.

In another embodiment, the vibration damping apparatus may alternatively be located outside the lidar 50. For example, an adapter bracket may be disposed between the lidar 50 and the recess 40, the lidar 50 is located on the adapter bracket, and the vibration damping apparatus may be disposed between the adapter bracket and the lidar 50, to implement a vibration damping design for the lidar 50.

It may be understood that, there may be one or a plurality of vibration damping apparatuses, and a plurality of vibration damping apparatuses means two or more vibration damping apparatuses. The plurality of vibration damping apparatuses may be distributed at intervals at corner positions, middle positions, or the like of the lidar 50. Specifically, the plurality of vibration damping apparatuses may be disposed according to a requirement. A quantity, mounting positions, and the like of the vibration damping apparatuses are not limited in this embodiment of this application.

In embodiments of this application, a structure design is performed on the lidar, so that the lidar 50 in embodiments of this application has smooth exterior lines, and the lidar 50 is more flattened, and can be better integrated with the appearance of the vehicle 100. An appearance decorative cover does not need to be disposed outside the lidar 50. This simplifies a mounting procedure, reduces mounting costs, and facilitates mounting. In addition, the lidar 50 does not significantly protrude from the vehicle 100, thereby effectively reducing visual obtrusiveness of the lidar 50. This helps improve aesthetic appeal of the vehicle 100, and can also effectively reduce wind resistance to the vehicle 100, thereby improving overall vehicle performance of the vehicle 100.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lidar, wherein the lidar comprises a first housing, a second housing, and an internal lidar module;
the first housing and the second housing define an enclosed cavity, and the internal lidar module is located in the cavity;
the first housing comprises a window region, and the window region is configured to allow laser light emitted by or laser light received by the lidar to pass through; and
the first housing has a continuous curved surface, and an included angle between a tangent plane of any point in the window region and a horizontal plane is less than 45°.

2. The lidar according to claim 1, wherein the internal lidar module is fastened to a bottom plate of the second housing, and a distance between the first housing and the bottom plate of the second housing in a first direction is less than or equal to a threshold.

3. The lidar according to claim 1 or 2, wherein the continuous curved surface of the first housing is a curved surface with G2 curvature or a curved surface with G3 curvature.

4. The lidar according to any one of claims 1 to 3, wherein an included angle between a tangent plane at a laser incidence point of the window region and laser light entering the lidar from the incidence point is greater than or equal to 15°.

5. The lidar according to any one of claims 1 to 4, wherein the first housing is an integrally formed structure.

6. The lidar according to claim 5, wherein the first housing comprises a cover region, and a material of the cover region is the same as a material of the window region.

7. The lidar according to any one of claims 1 to 5, wherein the first housing comprises a cover region, the cover region is a non-light-transmissive region, and the window region is configured to allow laser light to pass through and reduce transmission of light rays other than the laser light.

8. The lidar according to any one of claims 1 to 7, wherein the first housing is of an N-sided polygonal structure, N is an integer greater than or equal to 3 and less than or equal to 6, and each corner of the first housing is arc-shaped, or the first housing is of a circular structure, or the first housing is of an elliptical structure.

9. The lidar according to any one of claims 1 to 8, wherein the internal lidar module comprises a laser transceiver module, a beam scanning module, and a processing module.

10. The lidar according to any one of claims 1 to 9, wherein the second housing comprises the bottom plate, a first side plate, a second side plate, and a third side plate, the first side plate, the second side plate, and the third side plate are sequentially disposed around edges of the bottom plate, the first side plate and the third side plate are disposed opposite to each other, the bottom plate comprises a first plate body and a second plate body, the first plate body is located between the second plate body and the second side plate, the internal lidar module is located on the first plate body, and the second plate body is bent relative to the first plate body in a direction away from the first housing.

11. The lidar according to claim 1, wherein the first housing comprises a cover region, the cover region is plated with a transmission-reducing coating, and the transmission-reducing coating is configured to reduce external laser light entering the lidar.

12. The lidar according to any one of claims 1 to 11, wherein the lidar comprises a cable and a connector, the connector is fastened to the second housing, and the cable is configured to connect the connector to an external power supply; and
an edge region of the first housing protrudes from an edge of the second housing, and the edge region covers at least a part of a structure that is of the cable and that is located outside the second housing.

13. A vehicle, comprising the lidar according to any one of claims 1 to 12.

14. The vehicle according to claim 13, wherein the vehicle comprises a windshield and a roof, and the lidar is located between the windshield and the roof.

15. The vehicle according to claim 14, wherein the vehicle comprises a crossbeam, the crossbeam is located between the windshield and the roof, the crossbeam comprises a recess, and the lidar is fastened to the recess.

16. The vehicle according to any one of claims 13 to 15, wherein the vehicle comprises an indicator, the indicator is located in the cavity, and the indicator is configured to indicate an automated driving status of the vehicle.

17. The vehicle according to any one of claims 13 to 16, wherein the vehicle comprises a camera, and the camera is located in the cavity.
